# EUROPEAN PATENT SPECIFICATION

(11) **EP 4 075 226 B1**
(45) Date of publication and mention of the grant of the patent: **07.05.2025**
(21) Application number: 20899876.5
(22) Date of filing: 04.12.2020
(51) Int. Cl.: G05D 1/00

(54) **SELF-MOVING DEVICE AND WORKING METHOD THEREFOR**
SELBSTBEWEGENDE VORRICHTUNG UND ARBEITSVERFAHREN DAFÜR
DISPOSITIF AUTOMOTEUR ET SON PROCÉDÉ DE FONCTIONNEMENT

(30) Priority: 13.12.2019 CN 201911283545; 28.06.2020 CN 202010598063
(43) Date of publication of application: 19.10.2022
(73) Proprietor: Positec Power Tools (Suzhou) Co., Ltd., Suzhou, Jiangsu 215123 (CN)
(72) Inventor: HE, Mingming, Suzhou, Jiangsu 215123 (CN); WU, Shuanglong, Suzhou, Jiangsu 215123 (CN)
(74) Representative: Kilburn & Strode LLP
(86) International application number: PCT/CN2020/133881
(87) International publication number: WO 2021/115206

(56) References cited:
- EP-A1- 2 803 255
- WO-A1-2018/114341
- CN-A- 102 999 047
- CN-A- 105 230 225
- CN-A- 108 226 964
- CN-A- 108 965 803
- CN-A- 109 463 095

## Description

### Technical Field

The present invention relates to the field of automatic working, and in particular, to a self-moving device and a working method for same.

### Background

With the continuous advancement of computer and artificial intelligence technologies, more and more people choose to use automatic working systems in daily life. Self-moving devices working in the automatic working systems, such as a smart lawn mower, a sweeping robot, and other smart products, can work automatically after initial setting, so as to free users from cumbersome, tedious, and time-consuming housework such as cleaning rooms and maintaining lawns.

Generally, the self-moving devices may operate in scenarios without human operation monitoring or without a human being present. Using an example in which an automatic working system including an automatic lawn mower implements lawn mowing, the automatic lawn mower defines a working range by creating a map of a lawn, and automatically works in the working range. During working, unsafe phenomena such as going out of a boundary, accidentally injuring pedestrians, and the like may be caused by the lawn mower due to software or hardware defects thereof. However, the safety during the working of the lawn mower can be ensured by writing software safety functions into the lawn mower.

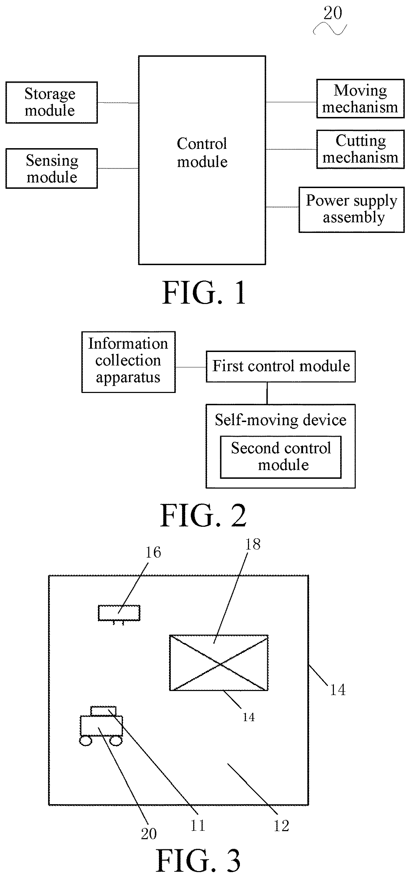

An existing lawn mowing system generally determines whether it goes out of a boundary by sensing a magnetic field. Corresponding functional modules are shown in FIG. 1, and may include: a control module, a moving mechanism, a cutting mechanism, a power supply assembly, a sensing module, and the like. Under the control of the control module, the moving mechanism drives a lawn mower to move in a working area, the cutting mechanism performs a cutting work in the working area, the sensing module senses a magnetic field signal generated by the boundary, and the power supply assembly is configured to supply power for the machine during movement and/or working.

The lawn mower in the existing lawn mowing system described above is usually designed according to the following principles, so as to respond to various safety situations in real time (for example, determining whether it goes out of a boundary, determining whether it encounters an obstacle, and the like) and control costs. The principles include: 1) In a case that performance requirements are met, the specification of a processor in the control module is often relatively low, for example, the processor may be a processor, such as M3 or M4 in ARM, with similar performance. 2) In the control module, an operating system, such as a real-time operating system (RTOS), having relatively simple functions and being allowed to directly perform operations on underlying hardware such as a memory is often used, or an operating system may not be used. 3) The capacity of the memory is relatively small, for example, 8 MB.

Because the automatic lawn mower travels and works without a user being present, there are specific requirements for the safety thereof. For example, the lawn mower can only work in the working area, while cannot move across the boundary of the working area to a non-working area without authorization; and the lawn mower can reliably detect an obstacle and take a timely action such as avoiding or returning against the detected obstacle. All of these safety processes described above are controlled by control software of the machine. Therefore, safety functions of the control software and the safety and reliability of hardware running the control software are of great significance to the automatic lawn mower.
WO2018114341A1 discloses a robotic vehicle operated to move along a path. The vehicle could be for mowing the lawn or for agricultural purposes having an operational part operating on an irregular surface. The control of the vehicle includes safety means to check that the vehicle seems to have left its path unintended.

### SUMMARY

To overcome defects of the existing technology, the problem to be resolved in the present invention is to provide a self-moving device with relatively high safety performance and a working method for same.

Aspects of an invention are set out in independent claims 1 and 9. Some optional features of embodiments are set out in the dependent claims.

The beneficial effects of the self-moving device provided in this application are as follows: Traveling and working of the self-moving device are controlled through collaborative working of two control modules that communicate with each other. Only one control module controls the self-moving device to perform a safety assurance operation, and performs self-checking on hardware and a control program related to control of performing of the safety assurance operation. In addition, in the two control modules, only the control module performs the self-checking according to a predetermined plan during the working of the self-moving device. In this application, in a case that the self-moving device includes two control modules, one of the control modules is controlled to perform the safety assurance operation, so that only one of the control modules needs to be self-checked (periodically self-checked) to ensure the safety of control software in the self-moving device, which simplifies the self-checking of self-moving devices, and in particular, self-moving devices with high performance. By adopting the method provided in this application, the sensitivity and the operating speed can be greatly improved based on the premise of ensuring the safety of the self-moving device during the working.

### BRIEF DESCRIPTION OF THE DRAWINGS

The foregoing objectives, technical solutions, and beneficial effects of the present invention can be implemented by using the following accompanying drawings:
FIG. 1 is a schematic structural diagram of an existing lawn mowing system according to the present invention;
FIG. 2 is a schematic structural diagram of a self-moving device according to the present invention;
FIG. 3 is a schematic diagram of a scenario of an automatic working system according to an implementation of the present invention;
FIG. 4 is a schematic diagram of a self-moving device according to an implementation of the present invention;
FIG. 5 is a schematic structural diagram of a satellite positioning module according to an implementation of the present invention;
FIG. 6 is a schematic structural diagram of a lawn mower according to an implementation of the present invention;
FIG. 7 is a schematic structural diagram of an automatic lawn mower according to an implementation of the present invention;
FIG. 8 is a schematic diagram of a work flow in which an automatic lawn mower performs path planning in a first control module according to an implementation of the present invention;
FIG. 9 is a schematic diagram of a work flow in which an automatic lawn mower creates a map in a first control module according to an implementation of the present invention; and
FIG. 10 is a schematic diagram of a work flow in which a first control module performs path planning according to an implementation of the present invention.

### DETAILED DESCRIPTION

The technical solutions in the embodiments of the present invention are described below with reference to the accompanying drawings in the embodiments of the present invention. Obviously, the described embodiments are some rather than all of the embodiments of the present invention. All other embodiments obtained by a person of ordinary skill in the art based on the embodiments of the present invention without creative efforts shall fall within the protection scope of the present invention.

Before describing the embodiments of the present invention in detail, it should be noted that, in the description of the present invention, relational terms such as left and right, up and down, front and rear, first and second, and the like may be used solely to distinguish one entity or action from another entity or action without necessarily requiring or implying any actual such relationship or order between such entities or actions. Terms "comprise", "include" or any other variants are intended to cover non-exclusive inclusion, such that a process, a method, an article or a device including a series of elements not only includes these elements, but also includes other elements not listed explicitly or intrinsic elements for the process, the method, the article, or the device.

In a case that the self-moving device works without a user being present, it is necessary to continuously check the reliability of software and hardware in a system to ensure the safety of the software and hardware. For example, the reliability of software needs to be examined and checked from aspects such as a software development environment, a development process, a software architecture design, a software logic, and the like. For hardware running safety-related functions, measures such as power-on self-checking and periodic self-checking are required. That is, the self-moving device needs to perform self-checking during the working to ensure the safety thereof. A lawn mower system shown in FIG. 1 includes a simple self-checking program. In addition, a manufacturer manufacturing a control module in the lawn mower system shown in FIG. 1 may provide a self-checking code for a customer.

With the development of technologies such as artificial intelligence and sensors, in a case that a user has a greatly increasing demand for a computing power of a machine, more advanced processors (CPUs), more complex or larger-scale control software, and larger-capacity (GB-level) memories are often required. Specifically, in a case that a self-moving device has a related positioning function such as RTK borderless, visual navigation, or the like, or another complex algorithm function, because functions and algorithm complexity of the machine are increased and require a relatively high computing power of the machine, a self-moving device with higher performance than that shown in FIG. 1 is required. For example, a self-moving device has a positioning function. As shown in FIG. 2, in the self-moving device, an information collection apparatus sends obtained current position information to a first control module, and the movement and/or working of the self-moving device is jointly controlled by the information collection apparatus, the first control module, and the self-moving device.

For the self-moving device with the positioning function shown in FIG. 2, because a computing power of the self-moving device is higher, and specifications of a processor and a memory used are also more complex, the difficulty in the safety checking of control software in the self-moving device is significantly increased. The difficulty is mainly reflected in two aspects: 1) the safety of control software, such as the self-checking of an operating system, interaction data, and the like; and 2) the safety and reliability of hardware running the control software, such as the self-checking of a clock and a timer, and the self-checking of a RAM, a Flash memory, and the like.

Specifically, as shown in FIG. 2, in the self-moving device with a relatively high data processing capability, a relatively advanced processor, and a relatively complex operating system (such as a Linux operating system), there is often a problem that a safety standard of original software is difficult to implement, or the implementation of the safety standard is costly. For example, in order to resolve the power-on self-checking of hardware (such as a memory) running the Linux operating system, it is necessary to insert a corresponding self-checking program segment into a Boot Loader of the Linux operating system. A person skilled in the art who is quite familiar with an underlying layer of the Linux operating system needs to spend much time in completing such an operation. In another example, in order to detect (periodic self-checking) the safety of the hardware during running of the control software, it is necessary to interrupt a process during the running of the software, and perform clock checking, memory scanning self-checking, and the like. Generally, the time required to scan 1 MB of a memory is in milliseconds, and the time required to scan 1 GB of the memory is in seconds. Therefore, in a case that a system capacity is relatively high (GB level), it takes a lot of time if the software is controlled to continuously scan the hardware within a specific period (for example, within 5s), which causes a relatively low operating speed of the machine, affects the normal working of the machine, and may cause the machine to fail to make a response in real time.

Considering that when the performance of the self-moving device is improved, due to the increased complexity of the self-checking program written therein and the relatively long time spent on the self-checking, the safety thereof cannot be ensured during use, this application provides a self-moving device. In the self-moving device, first, two control modules jointly complete operations that need to be performed during the working of the self-moving device, which resolves the problems that a self-moving device with relatively high performance has a relatively large amount of data for processing and a data processing speed is relatively low. Furthermore, in a case that the self-moving device includes two control modules, one of the control modules may be controlled to perform a safety assurance operation, so that only the one of the control modules that performs the safety assurance operation needs to be self-checked (periodically self-checked) to ensure the safety of control software in the self-moving device, which simplifies the self-checking of self-moving devices, and in particular, self-moving devices with high performance. By adopting a self-moving device architecture provided in this application, the sensitivity and an operating speed of the self-moving device can be greatly improved based on the premise of ensuring the safety during the working. This application is described in detail below by using specific embodiments.

In an embodiment of this application, the self-moving device may include: a housing; a moving mechanism, configured to support the housing and drive the self-moving device to move; and a working module, configured to be mounted on the housing, and to perform a predetermined work. In a case that the self-moving device involves complex operations, the self-moving device may further include: a first control module and a second control module. The first control module and the second control module are configured to communicate with each other and work collaboratively to control the moving mechanism and the working module. The second control module is configured to: control the self-moving device to perform a safety assurance operation; and perform self-checking on hardware and a control program related to control of performing of the safety assurance operation. In addition, of the first control module and the second control module, only the second control module is configured to perform the self-checking according to a predetermined plan during the working of the self-moving device.

In an embodiment of this application, the first control module may include: a memory management unit. In a case that there is a relatively large amount of data for processing in the machine, a limited memory in the machine may be managed by the memory management unit, so as to perform a process with a relatively large amount of data for processing through the first control module. The memory management unit may be configured to allocate storage space corresponding to a virtual address to data in the self-moving device. During the operation of the self-moving device, because the first control module has the memory management unit, and the machine allocates the storage space to the data through the memory management unit during program running, it is impossible to determine a physical address in which safety-related data is stored. However, the machine needs to read the safety-related data during the self-checking. Because the machine does not determine a physical address in which the safety-related data is located, if the self-moving device is controlled to perform the safety assurance operation through the first control module, it is very difficult for the self-moving device to implement the self-checking. Therefore, in this embodiment of this application, the first control module may be configured to perform a working process that has nothing to do with a safety logic and has a relatively large amount of data for processing, and a simple control module that controls the movement and working of the self-moving device is used for controlling the performing of the working process involving the safety logic, so that during the working of the self-moving device, it is only necessary to perform power-on self-checking or periodic self-checking for the simple control module involving the safety logic, which can simplify the self-checking process of a working system with high performance and ensure the safety thereof during the working.

That the second control module is configured to control the self-moving device to perform a safety assurance operation may include: controlling the self-moving device to move and/or work only within a working area defined by a boundary, and/or detecting whether there is an abnormal situation that prevents the self-moving device from moving and/or working. Specifically, the self-moving device moves and works within the working area under the control of the second control module. In a case that a safety problem such as a situation in which the machine goes out of a boundary is detected, the second control module controls the self-moving device to perform the following operations, including but not limited to: shutting down, and/or alarming, and/or restarting, and/or sending a notification message indicating that the machine is abnormal to the user. In a case that a safety problem such as falling, lifting, or the like that may harm the user is detected during the working and movement of the self-moving device, the second control module controls the self-moving device to shut down, and/or alarm, and/or restart, and/or send a notification message indicating that the machine is abnormal to the user.

In an embodiment of this application, the self-checking may include: power-on self-checking and self-checking performed according to a predetermined plan. The self-checking performed according to a predetermined plan may preferably include: periodic self-checking, or different self-checking performed according to user requirements or a preset time interval of the system. Before the second control module performs the self-checking according to the predetermined plan, the first control module and the second control module may perform power-on self-checking.

In an embodiment of this application, that the second control module is configured to perform self-checking on hardware related to control of performing of the safety assurance operation may include: detecting, during starting or working, whether hardware in the self-moving device is faulty, where the hardware may include: a storage module. Specifically, the second control module detects, during the working of the self-moving device, whether the hardware is faulty, that is, that the second control module performs the self-checking according to the predetermined plan may include that the second control module reads data directly from a physical address of the storage module in which safety-related data is stored, and determines, according to the read data, whether the self-moving device is faulty. Specifically, the determining, according to the read data, whether the self-moving device is faulty may include: detecting whether the read data is consistent with the stored data; and if yes, determining that the self-moving device is not faulty, and if not, determining that the self-moving device is faulty. Alternatively, the detecting whether the hardware is faulty may include sequentially inputting data in a plurality of physical addresses of the memory into an inherent self-checking program of the machine, and checking, according to the inherent self-checking program of the machine, whether the machine is faulty.

In this embodiment of this application, by adopting a self-moving device architecture provided in this application, the sensitivity and an operating speed of the self-moving device can be greatly improved based on the premise of ensuring the safety during the working.

In specific embodiments of this application below, the solutions of this application are described in detail by taking a self-moving device having a positioning function with a relatively large amount of data for processing as an example. Certainly, a system architecture and a data processing method described in the embodiments below are also applicable in a case that the self-moving device include other types of complex processing procedures, which are not limited in this application.

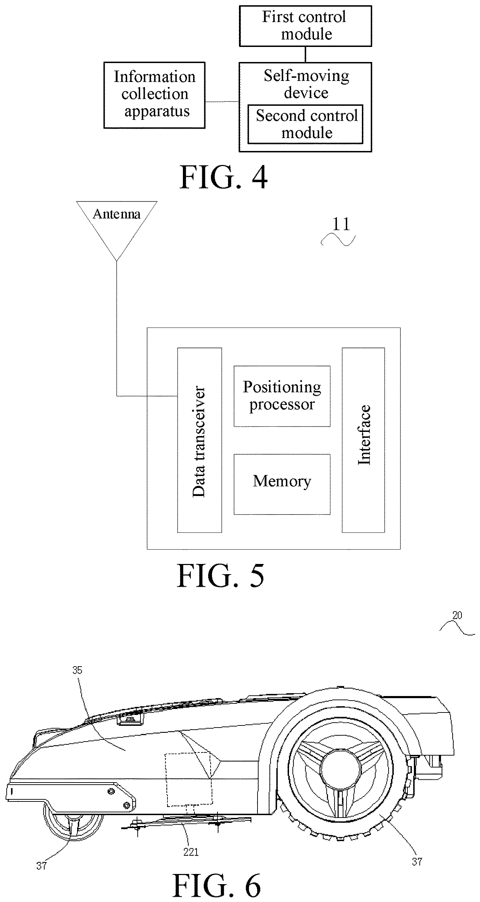

In a schematic diagram of a scenario of an automatic working system shown in FIG. 3 and a schematic structural diagram of a self-moving device shown in FIG. 4, the automatic working system may include: a self-moving device 20, a boundary 14, a charging station 16, an information collection apparatus 11, and a first control module. The self-moving device 20 travels and works only within a working area 12 defined by the boundary 14. The boundary 14 may be a perimeter of the entire working area, which is usually connected end to end to enclose the working area, and the boundary 14 may be physical. The physical boundary 14 may be a boundary formed by a wall, a fence, a railing, a pool, a boundary between the working area 12 and a non-working area 18, or the like. The charging station 16 may be configured to dock and charge the self-moving device that returns in a case that the power of the self-moving device is insufficient. The information collection apparatus 11 may be configured to collect current position information of a target object including the self-moving device, and control the traveling and/or working of the self-moving device by collecting position information of the self-moving device or the boundary, an obstacle, or the like. Specifically, the information collection apparatus 11 may include: a satellite positioning module and/or a vision module.

In a case that the information collection apparatus 11 is mounted on the self-moving device 20, the information collection apparatus 11 may be configured to obtain current position information of the self-moving device 20. In a case that the information collection apparatus 11 exists independently, the information collection apparatus may be configured to obtain its own current position information. As shown in FIG. 4, the first control module may perform data exchange with the self-moving device 20, and the information collection apparatus 14 may perform data exchange with the self-moving device 20. Furthermore, the first control module may be independent of the information collection apparatus, or may be detachably or fixedly mounted in the information collection apparatus. The first control module may be independent of the automatic lawn mower, or may be detachably or fixedly mounted on the automatic lawn mower. The first control module may receive current position information from the information collection apparatus or the second control module through a wired or wireless connection.

In this embodiment, the information collection apparatus 11 may include: a satellite positioning module (GNSS, such as GPS, Beidou, GPS-RTK, or the like) or a vision module, which may be detachably or fixedly mounted on the housing of the self-moving device 20. The satellite positioning module shown in FIG. 5 may include: a housing; an antenna, mounted on the top of the housing, and configured to receive satellite signals; an RF front end, mounted inside the housing, and configured to filter and amplify the received satellite signals; a positioning processor and a memory, configured to perform baseband or solution processing on the satellite signals to output coordinates of the positioning module; and an interface, configured to be electrically connected to other electronic components, where when the positioning module is docked with the self-moving device 20, the interface is electrically connected to the self-moving device 20, and the interface may be in the form of a reed or a connector, so that the positioning module can output position information to the self-moving device 20. The satellite positioning module may further include: a data transceiver module, configured to perform data exchange with other electronic components in a wireless manner. During generation of a map of the working area, position coordinates of a boundary of the working area or an obstacle may be recorded by holding the satellite positioning module or controlling the self-moving device 20 equipped with the satellite positioning module to travel along the boundary of the working area or the obstacle. During the working of the self-moving device 20, the information collection apparatus 11 may be mounted on the self-moving device 20, so that the self-moving device 20 can obtain the current position information of the self-moving device 20 connected to the information collection apparatus in real time.

In this embodiment of this application, the self-moving device 20 may include robots with a traveling function, such as a sweeping robot, an automatic lawn mower, an automatic snow sweeper, a food delivery robot, and the like. These robots automatically travel on a surface of a working area to perform tasks such as vacuuming, lawn mowing, or snow sweeping. The self-moving device may alternatively be another device suitable for unattended operation, which is not limited in this application. In the following embodiments of this application, an example in which the self-moving device is an automatic lawn mower 20 is used for description.

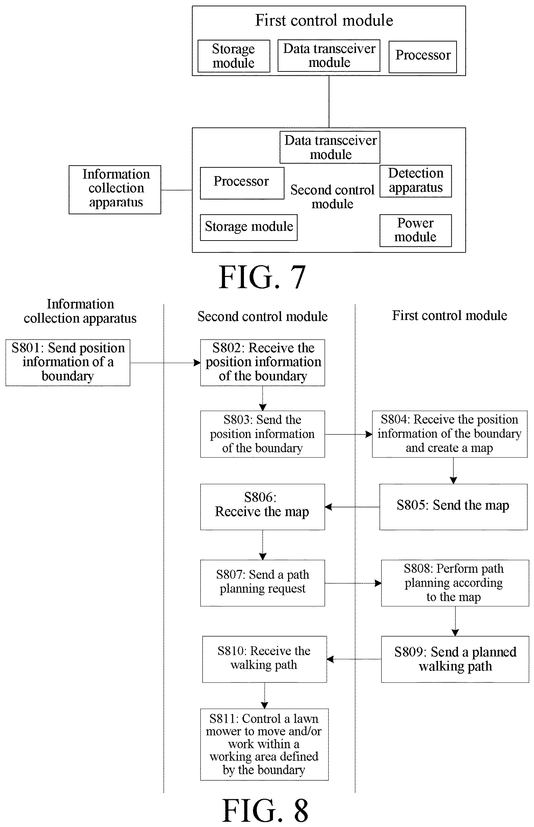

The automatic lawn mower in an embodiment of this application may include: an information collection apparatus and a first control module. As shown in FIG. 6 and FIG. 7, the automatic lawn mower in FIG. 7 may include a second control module, the automatic lawn mower may further include: a housing 35, a moving mechanism 37, and a cutting mechanism 221, and the moving mechanism, the cutting mechanism, and the second control module are mounted on the housing. The moving mechanism 37 may be a wheel rotatably arranged on the housing 35, and the cutting mechanism may include a cutting deck. The automatic lawn mower may move and/or work within a working area 12 defined by a boundary under the control of the second control module. The automatic lawn mower may further include a storage module configured to store data or run programs, a power module configured to drive the moving mechanism and the cutting mechanism, and a data transceiver module configured to transmit and receive data.

In this embodiment, the automatic lawn mower 20 may further include: a position sensor, the position sensor may further include, but is not limited to, at least one of the following: an inertial measurement unit (IMU), an ultrasonic sensor, a radar sensor, an infrared sensor, a UWB sensor, and the like, and the inertial measurement unit may include a gyroscope, an accelerometer, and the like. The position sensor can cooperate with the satellite navigation system to assist in the navigation of the satellite positioning module in a case that a satellite signal is poor.

In this embodiment of this application, the automatic lawn mower 20 may further include: an abnormality detection unit, and the abnormality detection unit may be further configured to detect an abnormal situation that occurs during the traveling and working of the lawn mower. The abnormality may include: an abnormal situation externally caused by a geographical factor or a human being. Specifically, the abnormal situation may include, but is not limited to, at least one of the following: encountering an obstacle, lifting, trapping, falling, and the like.

In this embodiment of this application, the automatic lawn mower 20 may include a second control module, and the second control module may receive current position information from the information collection apparatus. During the working of the lawn mower, the second control module receives, in real time, the current position information sent by the information collection apparatus, and controls the movement and working of the lawn mower in the working area based on the current position information.

In this embodiment, as shown in FIG. 7, the first control module may further include: a data transceiver module configured to transmit and receive data from the lawn mower, and a storage module configured to store related data. Preferably, an operating speed of the first control module may be greater than or equal to an operating speed of the second control module, so that the first control module can quickly create a map of a working area according to received position information of a boundary, so as to increase the working efficiency of the lawn mower. The first control module may be a host computer, and the second control module may be a lower computer. Operating systems in the first control module and the second control module may be the same or different, and the first control module or the second control module may adopt an operating system such as Linux or RTOS. In another embodiment of this application, the operating speed of the first control module may alternatively be less than that of the second control module, which is not limited in this application.

In this embodiment of this application, the automatic lawn mower may include: a map creating mode and a working mode. In the map creating mode, the first control module creates a map of a working area according to received position information of a boundary. In the working mode, the second control module controls, according to a map stored therein from the first control module and current position information received from the information collection apparatus, the lawn mower to move and/or work in the working area. In this embodiment, the map of the working area is created by the first control module, and the machine is controlled by the second control module to perform the working process, such as the movement and working in the working area, involving a safety logic. That is, processes not involving the safety logic and having a relatively large amount of data for processing are carried out in the first control module with a complex system, and processes involving the safety logic are carried out in the second control module with a simple control system. Therefore, the safety of control software in the automatic lawn mower can be ensured only by performing the self-checking on the second control module involving the safety logic without performing the self-checking on a complex system (the first control module) with a large amount of data for processing that needs to execute a complex algorithm, so that the self-checking complexity is reduced, and the self-checking process of a working system with high performance and a positioning function is simplified. Based on the premise of ensuring the safety of the automatic lawn mower during the working, the sensitivity and an operating speed of the lawn mower are improved.

In an embodiment of this application, path planning may be performed directly in the second control module. Specifically, after the second control module receives the map from the first control module, and in a case that a path planning request is received, a traveling path of the lawn mower may be directly planned in the second control module. Then, the lawn mower controls, according to the map from the first control module, the traveling path stored therein, and the current position information of the lawn mower, the moving mechanism to drive the lawn mower to move and/or work in the working area.

In another embodiment of this application, the path planning may be performed in the first control module. Specifically, after receiving the map from the first control module, the second control module may send a path planning request to the first control module. The first control module plans, in response to the path planning request, a traveling path according to a map of a working area, or initial position information and destination position information of the lawn mower, and sends the traveling path to the second control module. Then, the second control module may control, according to the map, the traveling path, and the current position information, the moving mechanism to drive the lawn mower to move and/or work in the working area.

FIG. 8 is a working flowchart in which an automatic lawn mower performs path planning in a first control module, which may specifically include the following steps:
S801: A positioning module sends position information of a boundary to a second control module.
S802: The second control module receives the position information of the boundary.
S803: The second control module sends the position information of the boundary to a first control module.
S804: The first control module creates a map according to the position information of the boundary.
S805: The first control module sends the map to the second control module.
S806: The second control module receives the map.
S807: The second control module sends a path planning request to the first control module.
S808: The first control module plans a traveling path according to the map.
S809: The first control module sends the planned traveling path to the second control module.
S810: The second control module receives the planned traveling path.
S811: The second control module controls, according to the map, the traveling path, and the current position information, a lawn mower to move and/or work within a working area defined by the boundary.

In this embodiment, the first control module is configured to perform processes with a large amount of data such as creating a map of a working area, planning a traveling path, and the like, and the second control module is configured to control the machine to perform the working process, such as the movement and working in the working area, involving a safety logic. That is, processes not involving the safety logic and having a relatively large amount of data for processing are carried out in a first control module with a complex system, and processes involving the safety logic are carried out in a second control module with a simple system. Therefore, the safety of control software in the automatic lawn mower can be ensured only by performing the self-checking on the second control module involving the safety logic without performing the self-checking on a complex system with a large amount of data for processing that needs to execute a complex algorithm, so that the self-checking complexity is reduced, the self-checking process of a working system with high performance and a positioning function is simplified, and the technical effect of improving the sensitivity and an operating speed of the lawn mower based on the premise of ensuring the safety of the automatic lawn mower during the working is achieved.

In this embodiment of this application, after the first control module completes the map creating, map correction, and path planning, the map and the traveling path may be saved in each of the first control module and the second control module separately, which is not limited in this application.

In this embodiment of this application, in a map creating mode, the user may hold an information collection apparatus or control a machine (for example, a lawn mower) carrying the information collection apparatus to move along a boundary, and the information collection apparatus obtains position information of the boundary during the movement. That is, the information collection apparatus is moved to obtain the position information of the boundary, so that the first control module can create a map of a working area according to the received position information of the boundary.

In an embodiment of this application, in the process in which the information collection apparatus is moved to obtain the position information of the boundary, the lawn mower and the first control module are in a power-on state, the information collection apparatus may send the position information of the boundary to the second control module during the movement, and the second control module receives the position information of the boundary from the information collection apparatus and sends the position information of the boundary to the first control module.

In another embodiment of this application, in the process in which the information collection apparatus is moved to obtain the position information of the boundary, the first control module is in a power-on state, the information collection apparatus may send the position information of the boundary to the first control module during the movement, and the first control module may directly receive the position information from the information collection apparatus.

In another embodiment of this application, the information collection apparatus may further include: a control unit (for example, a micro-control unit (MCU)), and the information collection apparatus may store the position information of the boundary during the movement. Specifically, in the process in which the information collection apparatus is moved to obtain the position information of the boundary, the information collection apparatus is in a power-on state, the information collection apparatus may store the position information of the boundary during the movement, and after collecting the position information of the boundary, the information collection apparatus is signal-connected to the first control module, so that the information collection apparatus can send the position information to the first control module in a wired or wireless manner. In this embodiment of this application, a wireless transmission unit or a docking interface may be mounted in the information collection apparatus, the first control module, or the second control module, so as to send and receive data such as the map or the position information of the boundary. Certainly, other data transmission methods may also be adopted, and details are not described in this application.

In this embodiment, after receiving the position information of the boundary, the first control module may create the map of the working area according to the received position information of the boundary. After the map is created, the map may be backed up in the first control module. Furthermore, the map may be backed up in the first control module and the second control module separately, so as to update and compare maps in the subsequent working process.

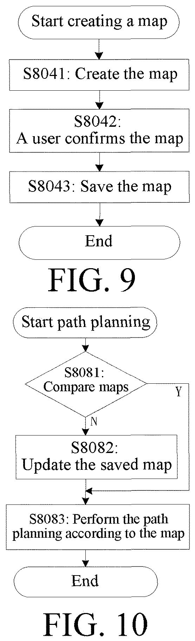

In a specific implementation, in step S804, a working flowchart in which a first control module creates a map according to position information of a boundary is shown in FIG. 9, and may include:
S8041: Create a map according to received position information of a boundary.
S8042: Determine a map according to received user information.
S8043: Save a map confirmed by a user.

Specifically, as described in the method above, the self-moving device may further include: a map correction mode, and after creating the map of the working area according to the received position information of the boundary, the first control module may control the machine to enter the map correction mode. In the map correction mode, the first control module may receive information about whether the map matches the working area from the user, and correct or confirm the created map according to the received information about whether the map matches the working area, to obtain the map of the working area. Specifically, the machine travels in the working area according to the map created during the map creating. During the traveling of the machine, the user observes whether a traveling path of the machine is consistent with an actual boundary 14. If not, information indicating inconsistency is sent to the first control module. In addition, the user sends a correct path to the machine to control the machine to travel along the actual boundary 14. The machine may change the map according to new position information received during the traveling, and after completing the map correction, the machine may obtain an updated map that is consistent with the actual boundary 14. When entering the working mode later, the machine may travel according to the accurate boundary 14 without unsafe phenomena such as going out of the boundary. In this embodiment, the user confirms the map and saves the map in the first control module; and sends the map to the second control module, and saves the map in the second control module. Then, during the working of the machine, the map saved in the second control module may be compared with the map in the first control module. In a case that a comparison result indicates consistency, the machine is controlled to work. In a case that the comparison result indicates inconsistency, the machine is controlled to stop working and/or give an alarm, which can ensure the accuracy of the map during the working of the machine, and the machine can travel and/or work according to an accurate map, so that the machine does not go out of the boundary and the safety of the machine is ensured.

In another specific implementation, the step of confirming the map may also be directly performed in the second control module. In step S804, the first control module only needs to create a map according to the received position information of the boundary. Then, in step S806, the second control module receives the map from the first control module, and the work of confirming the map is performed by using the second control module, which may specifically include:
S8061: The second control module determines a map according to received user information.
S8063: The second control module saves a map confirmed by a user.

Through the method for directly confirming a map in the second control module, a map related to the safety of the machine during the traveling is directly saved in the second control module, so that the safety of the machine during the working can be ensured only by performing the self-checking on the second control module.

In this embodiment of this application, in the working mode, the information collection apparatus is mounted on the lawn mower to obtain the current position information, and the second control module controls, according to the map and the current position information, the moving mechanism to drive the machine to move and/or work within the working area defined by the boundary. In addition, during the movement of the lawn mower, the second control module makes a mark in the map according to an abnormality detected by an abnormality detection unit, so as to update the map later. Specifically, the abnormality detection unit may be configured to detect, but is not limited to, at least one of the following situations, which may include: whether the lawn mower is passively displaced, the quality of a satellite signal at a current position of the lawn mower, whether the lawn mower encounters an obstacle, whether the lawn mower is trapped, and the like.

Specifically, in this embodiment, in the working mode, the lawn mower may search for, according to a traveling path in the second control module, a position point closest to the current position information in a planned traveling path, and travel to the position point. After reaching the position point, the second control module may travel and work along the planned path according to the map and the current position information. Alternatively, in a case that the lawn mower returns and is charged, the lawn mower may travel to, according to the received path, a charging station for charging.

In the working mode, during movement of the lawn mower, the second control module may make a mark in the map according to an abnormality detected by the abnormality detection unit, update the map, and store the updated map; and may then re-perform the path planning according to the updated map. In this embodiment, the lawn mower detects, during the working, whether the map has changed due to an external factor, and re-plans a traveling path according to the updated map, so that the accuracy of the traveling path of the lawn mower and the working efficiency of the lawn mower can be ensured.

In an embodiment of this application, the abnormality detection unit is signal-connected to the second control module. In a case that the abnormality detection unit detects that the lawn mower encounters an obstacle, lifting, and other abnormal situations during the traveling, the second control module may mark a position at which an abnormality occurs on the map. In a case that the position marked on the map meets a preset condition, or in a case that a quantity or a probability of abnormal situations such as lifting at the same position, encountering an obstacle, and the like encountered by the lawn mower meets a preset requirement, an abnormal position may be updated on the map in the second control module. The preset condition may be that marks in the map may form an outline of the obstacle, the lawn mower is lifted a plurality of times at the same position or encounters the obstacle a plurality of times, and the like.

In this embodiment, the second control module may send a path planning request in a scenario in which the lawn mower is started up, the lawn mower does not start working, the lawn mower returns and is charged, the lawn mower works for a period of time, the lawn mower detects map updates or receives an instruction from a user about path planning, or the like.

In a case that the second control module sends a path planning request to the first control module, where the path planning request includes the updated map stored in the second control module, the first control module plans the traveling path according to the map of the working area in response to the path planning request. In a specific implementation, in step S808, a working flowchart in which a first control module performs path planning according to a map is shown in FIG. 10, and may include the following steps:
S8081: Compare a received map with a stored map. If the received map is the same as the stored map, step S8083 is performed, and if the received map is different from the stored map, step S8082 is performed.
S8082: Update the map stored in a storage module to the received map.
S8083: Perform path planning according to the stored map.

Specifically, the first control module compares the received map with the map stored therein. In a case that the map received by the first control module is the same as the map stored therein, the first control module sends a traveling path stored therein to the second control module. Alternatively, the first control module may perform the path planning according to a map stored therein, and send a planned traveling path to the second control module. In a case that the map received by the first control module is different from the map stored therein, the first control module updates the map stored in the storage module to the received map, performs the path planning according to the updated map, and sends the re-planned traveling path to the second control module.

In another embodiment of this application, the method for path planning is substantially the same as that in the foregoing embodiments, and the difference is that in a case that the second control module sends the path planning request to the first control module, the path planning request does not carry the updated map. Specifically, in a case that the second control module sends a path planning request to the first control module, the first control module sends a map obtaining request to the second control module in response to the path planning request, so that the second control module sends the updated map to the first control module. Then, the first control module plans the traveling path according to the map of the working area.

In this embodiment of this application, in a case of sending a path planning request, the second control module may first detect whether a traveling path is stored in the lawn mower or a memory of the first control module. If it is detected that no traveling path is stored, the traveling path may be obtained by directly planning the traveling path according to the map.

In another embodiment of this application, in a case that the second control module sends a path planning request, if it is detected that the lawn mower or the memory of the first control module stores a traveling path, the path planning may be re-performed by using the method shown in FIG. 10 to obtain the traveling path.

In another embodiment of this application, the method for path planning is substantially the same as that in the foregoing embodiments, and the difference is that the abnormality detection unit is connected to the first control module. Specifically, the abnormality detection unit is signal-connected to the first control module. In a case that the lawn mower detects an abnormal situation, the first control module makes a mark in the map and updates the map. In a case that the lawn mower needs to perform the path planning, the path planning may be performed directly according to the updated map without performing the processes such as map comparison shown in FIG. 10.

Certainly, after the update of the map and the update of the traveling path, the lawn mower may continue to detect an abnormal situation during the traveling, and update the map and the traveling path by using the method in the foregoing embodiments, which is not limited in this application.

In this embodiment, traveling and working of the self-moving device are controlled through collaborative working of two control modules that communicate with each other. Only one control module controls the self-moving device to perform a safety assurance operation, and performs the self-checking on hardware and a control program related to control of performing of the safety assurance operation. In addition, in the two control modules, only the control module performs the self-checking according to a predetermined plan during the working of the self-moving device. In this application, in a case that the self-moving device includes two control modules, one of the control modules is controlled to perform the safety assurance operation, so that only one of the control modules needs to be self-checked (periodically self-checked) to ensure the safety of control software in the self-moving device, which simplifies the self-checking of self-moving devices, and in particular, self-moving devices with high performance. By adopting the method provided in this application, the sensitivity and the operating speed can be greatly improved based on the premise of ensuring the safety of the self-moving device during the working.

Corresponding to the self-moving device described above, this application further provides a working method for a self-moving device according to another aspect. The self-moving device includes: a first control module and a second control module. The method may include:
controlling, by the second control module, the self-moving device to perform a safety assurance operation, and performing self-checking on hardware and a control program related to control of performing of the safety assurance operation, where of the first control module and the second control module, only the second control module is configured to perform the self-checking according to a predetermined plan during working of the self-moving device.

In this embodiment, traveling and working of the self-moving device are controlled through collaborative working of two control modules that communicate with each other. Only one control module controls the self-moving device to perform a safety assurance operation, and performs self-checking on hardware and a control program related to control of performing of the safety assurance operation. In addition, in the two control modules, only the control module performs the self-checking according to a predetermined plan during the working of the self-moving device. In this application, in a case that the self-moving device includes two control modules, one of the control modules is controlled to perform the safety assurance operation, so that only one of the control modules needs to be self-checked (periodically self-checked) to ensure the safety of control software in the self-moving device, which simplifies the self-checking of self-moving devices, and in particular, self-moving devices with high performance. By adopting the method provided in this application, the sensitivity and the operating speed can be greatly improved based on the premise of ensuring the safety of the self-moving device during the working.

It should be noted that, in the descriptions of the present invention, terms "first", "second", and the like are only used to describe the objective and distinguish similar objects without a limitation on a sequence between the two, and cannot be understood as indicating or implying relative importance. In addition, in the description of the present invention, unless otherwise stated, "a plurality of" means two or more than two.

In the foregoing specific embodiments, the objective, technical solutions, and benefits of the present invention are further described in detail. It should be understood that the foregoing descriptions are merely specific embodiments of the present invention, but are not intended to limit the protection scope of the present invention.

## Claims

1. A self-moving device (20), comprising:
a housing (35);
a moving mechanism (37), configured to support the housing (35) and drive the self-moving device (20) to move;
a working module, configured to be mounted on the housing (35), and to perform a predetermined work;
an information collection apparatus (11), configured to collect current position information of the self-moving device (20); and
a first control module and a second control module, **characterized in that**
the first control module and the second control module are configured to communicate with each other and work collaboratively to control the moving mechanism (37) and the working module;
the first control module is configured to create and save a map of a working area (12) according to position information of the boundary (14) collected by the information collection apparatus (11), and send the map to the second control module;
to perform a safety assurance operation, the second control module is configured to control, according to the map and current position information received from the information collection apparatus (11), the self-moving device (20) to travel and/or work only within the working area (12) defined by the boundary (14);
the second control module is configured to perform self-checking on hardware and a control program related to control of performing of the safety assurance operation; and
of the first control module and the second control module, only the second control module is configured to perform the self-checking according to a predetermined plan during working of the self-moving device (20).

2. The self-moving device (20) according to claim 1, wherein the safety assurance operation comprises detecting whether there is an abnormal situation that prevents the self-moving device (20) from moving and/or working.

3. The self-moving device (20) according to claim 1, wherein during traveling of the self-moving device (20) according to the map, in a case that information from a user indicating whether the map is consistent with the working area (12) is received, the first control module is configured to control the self-moving device (20) to confirm the map according to the information to obtain the confirmed map, and to control the self-moving device (20) to move and/or work only within a working area (12) defined by the confirmed map.

4. The self-moving device (20) according to claim 1, wherein the second control module is configured to control the self-moving device (20) to perform the safety assurance operation during movement, and in a case that a safety problem is detected, the second control module is configured to control the self-moving device (20) to perform the following one or more operations: shutting down, and/or alarming, and/or restarting.

5. The self-moving device (20) according to claim 1, wherein the first control module comprises: a memory management unit.

6. The self-moving device (20) according to claim 1, wherein to perform self-checking on hardware related to control of performing of the safety assurance operation the second control module is configured to detect, during starting or working, whether hardware in the self-moving device (20) is faulty, wherein the hardware comprises: a storage module.

7. The self-moving device (20) according to claim 1, wherein the first control module and the second control module are configured to perform self-checking at power-on before, of the first and second control modules, only the second control module performs the self-checking according to a predetermined plan during working of the self-moving device (20).

8. The self-moving device (20) according to claim 1, wherein to perform the self-checking according to a predetermined plan during working of the self-moving device (20), that the second control module is configured to read data from a physical address of the storage module in which safety-related data is stored, and determine, according to the read data, whether the self-moving device (20) is faulty.

9. A working method for a self-moving device (20), wherein the self-moving device (20) comprises: a housing (35); a moving mechanism (37), configured to support the housing (35) and drive the self-moving device (20) to move; a working module, configured to be mounted on the housing (35), and to perform a predetermined work; and a first control module and a second control module, **characterized in that** the method comprises:
the first control module and the second control module communicating with each other and working collaboratively to control the moving mechanism (37) and the working module;
the first control module creating and saving a map of a working area (12) according to position information of the boundary (14) collected by an information collection apparatus (11), and sending the map to the second control module;
to perform a safety assurance operation, the second control module controlling, according to the map and current position information received from the information collection apparatus (11), the self-moving device (20) to travel and/or work only within the working area (12) defined by the boundary (14);
the second control module performing self-checking on hardware and a control program related to control of performing of the safety assurance operation, wherein of the first control module and the second control module, only the second control module performs the self-checking according to a predetermined plan during working of the self-moving device (20).

10. The working method for a self-moving device (20) according to claim 9, wherein during traveling of the self-moving device (20) according to the map, in a case that information from a user indicating whether the map is consistent with the working area (12) is received, the first control module controls the self-moving device (20) to confirm the map according to the information to obtain the confirmed map, and controls the self-moving device (20) to move and/or work only within a working area (12) defined by the confirmed map.

11. The working method for a self-moving device (20) according to claim 9, wherein the second control module controls the self-moving device (20) to perform the safety assurance operation during movement, and in a case that a safety problem is detected, the second control module controls the self-moving device (20) to perform the following one or more operations: shutting down, and/or alarming, and/or restarting.

12. The working method for a self-moving device (20) according to claim 9, wherein to perform self-checking on hardware related to control of performing of the safety assurance operation the second control module detects, during starting or working, whether hardware in the self-moving device (20) is faulty, wherein the hardware comprises: a storage module.

13. The working method for a self-moving device (20) according to claim 9, wherein the first control module and the second control module are configured to perform self-checking at power-on before only the second control module performs the self-checking according to a predetermined plan during working of the self-moving device (20).

14. The working method for a self-moving device (20) according to claim 9, wherein to perform the self-checking according to a predetermined plan during working of the self-moving device (20), the second control module reads data from a physical address of the storage module in which safety-related data is stored, and determines, according to the read data, whether the self-moving device (20) is faulty.

15. The working method for a self-moving device (20) according to claim 9, wherein the safety assurance operation comprises detecting whether there is an abnormal situation that prevents the self-moving device (20) from moving and/or working.

## Patentansprüche

1. Selbstbewegende Vorrichtung (20), die umfasst:
ein Gehäuse (35);
einen Bewegungsmechanismus (37), der dazu ausgelegt ist, das Gehäuse (35) zu tragen und die selbstbewegende Vorrichtung (20) zum Bewegen anzutreiben;
ein Arbeitsmodul, das dazu ausgelegt ist, an dem Gehäuse (35) montiert zu werden und eine vorbestimmte Arbeit durchzuführen;
eine Informationssammeleinrichtung (11), die dazu ausgelegt ist, aktuelle Positionsinformationen der selbstbewegenden Vorrichtung (20) zu sammeln; und
ein erstes Steuermodul und ein zweites Steuermodul, **dadurch gekennzeichnet, dass**
das erste Steuermodul und das zweite Steuermodul dazu ausgelegt sind, miteinander zu kommunizieren und zusammenzuarbeiten, um den Bewegungsmechanismus (37) und das Arbeitsmodul zu steuern;
das erste Steuermodul dazu ausgelegt ist, eine Karte eines Arbeitsbereichs (12) gemäß Positionsinformationen der Grenze (14), die durch die Informationssammeleinrichtung (11) gesammelt werden, zu erzeugen und zu speichern, und die Karte an das zweite Steuermodul zu senden;
zum Durchführen einer Sicherheitssicherungsoperation das zweite Steuermodul dazu ausgelegt ist, die selbstbewegende Vorrichtung (20) gemäß der Karte und von der Informationssammeleinrichtung (11) empfangenen aktuellen Positionsinformationen derart zu steuern, dass sie nur innerhalb des durch die Grenze (14) definierten Arbeitsbereichs (12) fährt und/oder in diesem arbeitet;
das zweite Steuermodul dazu ausgelegt ist, eine Selbstprüfung an Hardware und einem Steuerprogramm, die sich auf die Steuerung des Durchführens der Sicherheitssicherungsoperation beziehen, durchzuführen; und
vom ersten Steuermodul und vom zweiten Steuermodul nur das zweite Steuermodul dazu ausgelegt ist, die Selbstprüfung gemäß einem vorbestimmten Plan während des Arbeitens der selbstbewegenden Vorrichtung (20) durchzuführen.

2. Selbstbewegende Vorrichtung (20) nach Anspruch 1, wobei die Sicherheitssicherungsoperation ein Detektieren umfasst, ob eine abnormale Situation vorliegt, die verhindert, dass sich die selbstbewegende Vorrichtung (20) bewegt und/oder arbeitet.

3. Selbstbewegende Vorrichtung (20) nach Anspruch 1, wobei während des Fahrens der selbstbewegenden Vorrichtung (20) gemäß der Karte in einem Fall, in dem Informationen von einem Benutzer, die angeben, ob die Karte mit dem Arbeitsbereich (12) konsistent ist, empfangen werden, das erste Steuermodul dazu ausgelegt ist, die selbstbewegende Vorrichtung (20) derart zu steuern, dass sie die Karte gemäß den Informationen bestätigt, um die bestätigte Karte zu erhalten, und um die selbstbewegende Vorrichtung (20) derart zu steuern, dass sie sich nur innerhalb eines durch die bestätigte Karte definierten Arbeitsbereichs (12) bewegt und/oder in diesem arbeitet.

4. Selbstbewegende Vorrichtung (20) nach Anspruch 1, wobei das zweite Steuermodul dazu ausgelegt ist, die selbstbewegende Vorrichtung (20) derart zu steuern, dass sie die Sicherheitssicherungsoperation während einer Bewegung durchführt, und in einem Fall, in dem ein Sicherheitsproblem detektiert wird, das zweite Steuermodul dazu ausgelegt ist, die selbstbewegende Vorrichtung (20) derart zu steuern, dass sie die folgende(n) eine(n) oder mehreren Operation(en) durchführt: Ausschalten und/oder Auslösen eines Alarms und/oder Neustarten.

5. Selbstbewegende Vorrichtung (20) nach Anspruch 1, wobei das erste Steuermodul umfasst: eine Speicherverwaltungseinheit.

6. Selbstbewegende Vorrichtung (20) nach Anspruch 1, wobei zum Durchführen einer Selbstprüfung an Hardware, die sich auf die Steuerung des Durchführens der Sicherheitssicherungsoperation bezieht, das zweite Steuermodul dazu ausgelegt ist, während des Startens oder Arbeitens zu detektieren, ob Hardware in der selbstbewegenden Vorrichtung (20) fehlerhaft ist, wobei die Hardware umfasst: ein Speichermodul.

7. Selbstbewegende Vorrichtung (20) nach Anspruch 1, wobei das erste Steuermodul und das zweite Steuermodul dazu ausgelegt sind, eine Selbstprüfung beim Einschalten durchzuführen, bevor, vom ersten und vom zweiten Steuermodul, nur das zweite Steuermodul die Selbstprüfung gemäß einem vorbestimmten Plan während des Arbeitens der selbstbewegenden Vorrichtung (20) durchführt.

8. Selbstbewegende Vorrichtung (20) nach Anspruch 1, wobei zum Durchführen der Selbstprüfung gemäß einem vorbestimmten Plan während des Arbeitens der selbstbewegenden Vorrichtung (20) das zweite Steuermodul dazu ausgelegt ist, Daten von einer physischen Adresse des Speichermoduls zu lesen, in dem sicherheitsbezogene Daten gespeichert sind, und gemäß den gelesenen Daten zu bestimmen, ob die selbstbewegende Vorrichtung (20) fehlerhaft ist.

9. Arbeitsverfahren für eine selbstbewegende Vorrichtung (20), wobei die selbstbewegende Vorrichtung (20) umfasst: ein Gehäuse (35); einen Bewegungsmechanismus (37), der dazu ausgelegt ist, das Gehäuse (35) zu tragen und die selbstbewegende Vorrichtung (20) zum Bewegen anzutreiben; ein Arbeitsmodul, das dazu ausgelegt ist, an dem Gehäuse (35) montiert zu werden und eine vorbestimmte Arbeit durchzuführen; und ein erstes Steuermodul und ein zweites Steuermodul, **dadurch gekennzeichnet, dass** das Verfahren umfasst:
dass das erste Steuermodul und das zweite Steuermodul miteinander kommunizieren und zusammenarbeiten, um den Bewegungsmechanismus (37) und das Arbeitsmodul zu steuern;
dass das erste Steuermodul eine Karte eines Arbeitsbereichs (12) gemäß Positionsinformationen der Grenze (14), die durch eine Informationssammeleinrichtung (11) gesammelt werden, erzeugt und speichert und die Karte an das zweite Steuermodul sendet;
dass, zum Durchführen einer Sicherheitssicherungsoperation, das zweite Steuermodul die selbstbewegende Vorrichtung (20) gemäß der Karte und von der Informationssammeleinrichtung (11) empfangenen aktuellen Positionsinformationen derart steuert, dass sie nur innerhalb des durch die Grenze (14) definierten Arbeitsbereichs (12) fährt und/oder in diesem arbeitet;
dass das zweite Steuermodul eine Selbstprüfung an Hardware und einem Steuerprogramm, die sich auf die Steuerung des Durchführens der Sicherheitssicherungsoperation beziehen, durchführt, wobei, vom ersten Steuermodul und vom zweiten Steuermodul, nur das zweite Steuermodul die Selbstprüfung gemäß einem vorbestimmten Plan während des Arbeitens der selbstbewegenden Vorrichtung (20) durchführt.

10. Arbeitsverfahren für eine selbstbewegende Vorrichtung (20) nach Anspruch 9, wobei während des Fahrens der selbstbewegenden Vorrichtung (20) gemäß der Karte in einem Fall, in dem Informationen von einem Benutzer, die angeben, ob die Karte mit dem Arbeitsbereich (12) konsistent ist, empfangen werden, das erste Steuermodul die selbstbewegende Vorrichtung (20) derart steuert, dass sie die Karte gemäß den Informationen bestätigt, um die bestätigte Karte zu erhalten, und die selbstbewegende Vorrichtung (20) derart steuert, dass sie sich nur innerhalb eines durch die bestätigte Karte definierten Arbeitsbereichs (12) bewegt und/oder in diesem arbeitet.

11. Arbeitsverfahren für eine selbstbewegende Vorrichtung (20) nach Anspruch 9, wobei das zweite Steuermodul die selbstbewegende Vorrichtung (20) derart steuert, dass sie die Sicherheitssicherungsoperation während einer Bewegung durchführt, und in einem Fall, in dem ein Sicherheitsproblem detektiert wird, das zweite Steuermodul die selbstbewegende Vorrichtung (20) derart steuert, dass sie die folgende(n) eine(n) oder mehreren Operation(en) durchführt: Ausschalten und/oder Auslösen eines Alarms und/oder Neustarten.

12. Arbeitsverfahren für eine selbstbewegende Vorrichtung (20) nach Anspruch 9, wobei zum Durchführen einer Selbstprüfung an Hardware, die sich auf die Steuerung des Durchführens der Sicherheitssicherungsoperation bezieht, das zweite Steuermodul während des Startens oder Arbeitens detektiert, ob Hardware in der selbstbewegenden Vorrichtung (20) fehlerhaft ist, wobei die Hardware umfasst: ein Speichermodul.

13. Arbeitsverfahren für eine selbstbewegende Vorrichtung (20) nach Anspruch 9, wobei das erste Steuermodul und das zweite Steuermodul dazu ausgelegt sind, eine Selbstprüfung beim Einschalten durchzuführen, bevor nur das zweite Steuermodul die Selbstprüfung gemäß einem vorbestimmten Plan während des Arbeitens der selbstbewegenden Vorrichtung (20) durchführt.

14. Arbeitsverfahren für eine selbstbewegende Vorrichtung (20) nach Anspruch 9, wobei zum Durchführen der Selbstprüfung gemäß einem vorbestimmten Plan während des Arbeitens der selbstbewegenden Vorrichtung (20) das zweite Steuermodul Daten von einer physischen Adresse des Speichermoduls liest, in dem sicherheitsbezogene Daten gespeichert sind, und gemäß den gelesenen Daten bestimmt, ob die selbstbewegende Vorrichtung (20) fehlerhaft ist.

15. Arbeitsverfahren für eine selbstbewegende Vorrichtung (20) nach Anspruch 9, wobei die Sicherheitssicherungsoperation ein Detektieren umfasst, ob eine abnormale Situation vorliegt, die verhindert, dass sich die selbstbewegende Vorrichtung (20) bewegt und/oder arbeitet.

## Revendications

1. Dispositif automoteur (20), comprenant :
un boîtier (35) ;
un mécanisme de déplacement (37), configuré pour supporter le boîtier (35) et entraîner le dispositif automoteur (20) pour le déplacer ;
un module de travail, configuré pour être monté sur le boîtier (35), et pour effectuer un travail prédéterminé ;
un appareil de collecte d'informations (11), configuré pour collecter des informations sur la position courante du dispositif automoteur (20) ; et
un premier module de commande et un second module de commande, **caractérisé en ce que**
le premier module de commande et le second module de commande sont configurés pour communiquer l'un avec l'autre et travailler en collaboration pour commander le mécanisme de déplacement (37) et le module de travail ;
le premier module de commande est configuré pour créer et sauvegarder une carte d'une zone de travail (12) en fonction des informations de position de la limite (14) collectées par l'appareil de collecte d'informations (11), et envoyer la carte au second module de commande ;
pour effectuer une opération d'assurance de sécurité, le second module de commande est configuré pour commander, en fonction de la carte et des informations sur la position courante reçues de l'appareil de collecte d'informations (11), le dispositif automoteur (20) pour qu'il se déplace et/ou travaille uniquement dans la zone de travail (12) définie par la limite (14) ;
le second module de commande est configuré pour effectuer un autocontrôle du matériel et d'un programme de commande lié à la commande de l'exécution de l'opération d'assurance de sécurité ; et
parmi le premier module de commande et le second module de commande, seul le second module de commande est configuré pour effectuer l'autocontrôle selon un plan prédéterminé pendant le fonctionnement du dispositif automoteur (20).

2. Dispositif automoteur (20) selon la revendication 1, dans lequel l'opération d'assurance de sécurité comprend de détecter s'il existe ou non une situation anormale qui empêche le dispositif automoteur (20) de se déplacer et/ou de fonctionner.

3. Dispositif automoteur (20) selon la revendication 1, dans lequel, pendant le déplacement du dispositif automoteur (20) selon la carte, dans le cas où des informations provenant d'un utilisateur indiquant si la carte est cohérente avec la zone de travail (12) sont reçues, le premier module de commande est configuré pour commander le dispositif automoteur (20) afin de confirmer la carte en fonction des informations pour obtenir la carte confirmée, et pour commander le dispositif automoteur (20) afin qu'il se déplace et/ou travaille uniquement dans une zone de travail (12) définie par la carte confirmée.

4. Dispositif automoteur (20) selon la revendication 1, dans lequel le second module de commande est configuré pour commander le dispositif automoteur (20) afin d'effectuer l'opération d'assurance de sécurité pendant le mouvement et, dans le cas où un problème de sécurité est détecté, le second module de commande est configuré pour commander le dispositif automoteur (20) afin d'effectuer l'une ou plusieurs des opérations suivantes :
l'arrêt, et/ou l'alarme, et/ou le redémarrage.

5. Dispositif automoteur (20) selon la revendication 1, dans lequel le premier module de commande comprend :
une unité de gestion de mémoire.

6. Dispositif automoteur (20) selon la revendication 1, dans lequel, pour effectuer un autocontrôle du matériel lié au contrôle de l'exécution de l'opération d'assurance de sécurité, le second module de commande est configuré pour détecter, pendant le démarrage ou le fonctionnement, si le matériel du dispositif automoteur (20) est défectueux, le matériel comprenant : un module de stockage.

7. Dispositif automoteur (20) selon la revendication 1, dans lequel le premier module de commande et le second module de commande sont configurés pour effectuer un autocontrôle à la mise sous tension avant que, parmi les premier et second modules de commande, seul le second module de commande effectue l'autocontrôle selon un plan prédéterminé pendant le fonctionnement du dispositif automoteur (20).

8. Dispositif automoteur (20) selon la revendication 1, dans lequel, pour effectuer l'autocontrôle selon un plan prédéterminé pendant le fonctionnement du dispositif automoteur (20), le second module de commande est configuré pour lire les données à partir d'une adresse physique du module de stockage dans lequel les données relatives à la sécurité sont stockées, et déterminer, en fonction des données lues, si le dispositif automoteur (20) est défectueux.

9. Procédé de fonctionnement d'un dispositif automoteur (20), dans lequel le dispositif automoteur (20) comprend : un boîtier (35) ; un mécanisme de déplacement (37), configuré pour supporter le boîtier (35) et entraîner le dispositif automoteur (20) pour qu'il se déplace ; un module de travail, configuré pour être monté sur le boîtier (35) et pour effectuer un travail prédéterminé ; et un premier module de commande et un second module de commande, **caractérisé en ce que** le procédé comprend :
le premier module de commande et le second module de commande communiquant l'un avec l'autre et travaillant en collaboration pour commander le mécanisme de déplacement (37) et le module de travail ;
le premier module de commande créant et enregistrant une carte d'une zone de travail (12) en fonction des informations de position de la limite (14) collectées par un appareil de collecte d'informations (11), et envoyant la carte au second module de commande ;
pour effectuer une opération d'assurance de sécurité, le second module de commande contrôlant, en fonction de la carte et des informations de position courantes reçues de l'appareil de collecte d'informations (11), le dispositif automoteur (20) pour qu'il se déplace et/ou travaille uniquement dans la zone de travail (12) définie par la limite (14) ;
le second module de commande effectuant un autocontrôle du matériel et d'un programme de commande lié à la commande de l'exécution de l'opération d'assurance de sécurité, où, parmi le premier module de commande et le second module de commande, seul le second module de commande effectue l'autocontrôle selon un plan prédéterminé pendant le fonctionnement du dispositif automoteur (20).

10. Procédé de fonctionnement d'un dispositif automoteur (20) selon la revendication 9, dans lequel, pendant le déplacement du dispositif automoteur (20) selon la carte, dans le cas où des informations provenant d'un utilisateur indiquant si la carte est cohérente avec la zone de travail (12) sont reçues, le premier module de commande commande le dispositif automoteur (20) pour confirmer la carte en fonction des informations afin d'obtenir la carte confirmée, et commande le dispositif automoteur (20) pour qu'il se déplace et/ou travaille uniquement dans une zone de travail (12) définie par la carte confirmée.

11. Procédé de fonctionnement d'un dispositif automoteur (20) selon la revendication 9, dans lequel le second module de commande commande le dispositif automoteur (20) pour qu'il effectue l'opération d'assurance de sécurité pendant le mouvement et, dans le cas où un problème de sécurité est détecté, le second module de commande commande le dispositif automoteur (20) pour qu'il effectue les une ou plusieurs opérations suivantes : l'arrêt et/ou l'alarme et/ou le redémarrage.

12. Procédé de fonctionnement d'un dispositif automoteur (20) selon la revendication 9, dans lequel, pour effectuer un autocontrôle du matériel lié au contrôle de l'exécution de l'opération d'assurance de sécurité, le second module de commande détecte, pendant le démarrage ou le fonctionnement, si le matériel du dispositif automoteur (20) est défectueux, le matériel comprenant : un module de stockage.

13. Procédé de fonctionnement d'un dispositif automoteur (20) selon la revendication 9, dans lequel le premier module de commande et le second module de commande sont configurés pour effectuer un autocontrôle à la mise sous tension avant que seul le second module de commande effectue l'autocontrôle selon un plan prédéterminé pendant le fonctionnement du dispositif automoteur (20).

14. Procédé de fonctionnement d'un dispositif automoteur (20) selon la revendication 9, dans lequel, pour effectuer l'autocontrôle selon un plan prédéterminé pendant le fonctionnement du dispositif automoteur (20), le second module de commande lit les données à partir d'une adresse physique du module de stockage dans lequel les données relatives à la sécurité sont stockées, et détermine, en fonction des données lues, si le dispositif automoteur (20) est défectueux.

15. Procédé de fonctionnement d'un dispositif automoteur (20) selon la revendication 9, dans lequel l'opération d'assurance de sécurité comprend de détecter s'il existe ou non une situation anormale qui empêche le dispositif automoteur (20) de se déplacer et/ou de fonctionner.
